# NOUVEAU FASCICULE DE BREVET EUROPEEN

(11) **EP 0 813 568 B2**
(45) Date de publication et mention de la décision concernant l'opposition: **09.05.2007**
(45) Mention de la délivrance du brevet: 19.05.2004
(21) Numéro de dépôt: 96906797.4
(22) Date de dépôt: 07.03.1996
(51) Int. Cl.: C08K 3/04, C08K 5/00, C08K 5/3435

(54) **COMPOSITION A BASE DE POLYAMIDE A STABILITE LUMIERE ELEVEE**
LICHTSTABILISIERTE POLYAMIDZUSAMMENSETZUNGEN
HIGHLY LIGHT-STABLE POLYAMIDE COMPOSITION

(30) Priorité: 10.03.1995 FR 9503158
(43) Date de publication de la demande: 29.12.1997
(73) Titulaire: RHODIA ENGINEERING PLASTICS S.A., 69192 Saint-Fons (FR)
(72) Inventeur: BERLIET, Jérôme, F-69008 Lyon (FR)
(74) Mandataire: Valentino, Cédric
(86) Numéro de dépôt international: PCT/FR1996/000359
(87) Numéro de publication internationale: WO 1996/028503

(56) Documents cités:
- EP-A- 0 052 944
- EP-A- 0 610 155
- LU-A- 46 741
- US-A- 2 868 757
- US-A- 4 391 943
- US-A- 4 839 405

## Description

La présente invention concerne une composition à base de polyamide présentant une stabilité à la lumière élevée.

Elle concerne plus particulièrement une composition à base de polyamide comprenant un pigment noir.

Les compositions à base de matière thermoplastique comprenant ou non des charges de renforcement sont utilisées pour la fabrication de pièces moulées diverses telles que pièces pour les connections électriques, pièces de moteur thermique tel que les moteurs de véhicules automobiles, pièces diverses fixées sur le corps de différents appareils ou faisant partie de celui-ci. A titre d'exemple, on peut citer les tableaux de commande de différents appareils électroménagers, ou des éléments fixés dans l'habitacle d'un véhicule ou sur la carrosserie de celui-ci. Ainsi, les coquilles de rétroviseur, les poignées, ou les éléments du tableau de bord peuvent être réalisés par moulage d'une composition à base de matière thermoplastique.

Parmi les matières thermoplastiques, les polyamides sont utilisés pour la réalisation de pièces requérant des propriétés mécaniques et/ou une tenue en température élevées.

Il est demandé, pour les pièces qui sont exposées en permanence à la lumière et/ou aux intempéries, une résistance du matériau à ces deux éléments, c'est-à-dire une conservation des propriétés du matériau après exposition à la lumière et/ou aux intempéries.

Le document De 3705226 décrit des compositions à base de polyamide comprenant un pigment noir (noir de carbone) et comprenant un polyamide 6I pour améliorer notamment la résistance aux intempéries et à l'attaque par des sels tels que le chlorure de calcium.

Parmi les matières thermoplastiques, les polyamides ont une résistance à l'agression par la lumière et/ou les intempéries plus faibles que le polyester thermoplastique par exemple.

Un des objets de la présente invention est de proposer une composition polyamide présentant une stabilité améliorée de ses propriétés sous l'effet de la lumière et/ou des intempéries par exemple voisine de celle du polyester.

A cet effet l'invention propose une composition constituée de :
- une matrice thermoplastique constituée d'un polyamide semi-cristallin choisi parmi le polyamide 6, le polyamide 6.6 ou le copolyamide 6.6/6,
- des stabilisants thermiques,
- des pigments dont au moins un pigment noir, ledit pigment noir comprenant au moins un pigment noir d'origine minérale,
- au moins un composé diminuant l'effet de la lumière et/ou des rayons U.V. sur la dégradation de la matière polymérique formant la matrice de la composition,
- un composé diminuant la vitesse de cristallisation de la matrice thermoplastique choisi dans le groupe constitué des polyols et des produits de condensation de l'aniline avec le nitrobenzene,
- éventuellement une charge de renforcement choisie dans le groupe comprenant : des fibres de verre, fibres de carbone, fibres en polymère thermostable, du kaolin, du talc, du mica ; et
- éventuellement des additifs utilisés pour la fabrication de compositions polyamides destinées à être moulées choisis dans le groupe constitué par les lubrifiants, ignifugeants, plastifiants, agents nucléants, et agents d'amélioration de la résilience.

Les additifs diminuant l'effet des rayonnements sur la dégradation de la matrice polymérique comprennent des composés antioxydants, et/ou des composés appelés anti-UV ou absorbant les rayonnements tels que les rayons U.V.

Ces additifs sont par exemple décrits dans l'ouvrage intitulé "Oxidation, Inhibition in Organic Materials" édités par Jan Pospisil et Peter P. Klemchuk (1990), ou dans la demande de brevet européen n° 0 610 155.

A titre d'exemple, on peut citer comme composés antioxydants convenables pour l'invention, les monophénols substitués ou non par des groupements alcoyles tels que le 2,6-di-tert-butyl-4-méthylphénol ou analogues ; les hydroquinones substituées ou non par des groupements alcoyles telles que la 2,6-di-tert-butyl-4-méthoxyphénol ; les thiophényléthers hydroxylés tels que le 2,2'-thiobis(6-tert-butyl-4-méthylphénol) ; les bisphénols substitués ou non par des groupements alcoyles tels que 2,2'-méthylène-bis(6-tert-butyl-4 méthylphénol) ; les composés du benzène tels que le 1,3,5-tri-(3,5-di-tert-butyl-4-hydroxybenzyl)-2,4,6-triméthylbenzène ; les aminophénols acylés ; les amines encombrées telles que la N,N'-di-isopropyl-p-phénylènediamine, phénothiazine, 1,4-benzothiazine ou analogue.

On peut également utiliser des antioxydants appelés "secondaires" tels que les phosphites, phosphonites aromatiques ou aliphatiques, les sels alcalins d'acide phényl-phosphonique ou d'acide hypophosphoreux.

Comme composés stabilisants lumière ou absorbants des rayons UV, on peut citer, à titre d'exemples, les 2-(2'-hydroxyphényl)benzotriazoles comme le 2-(2'-hydroxy-5'-méthylphényl)benzotriazole ou analogue; les 2-hydroxy-benzophénones comme la 3,3'-méthylène-bis(2-hydroxy-4-méthoxybenzophénone) ; les esters d'acides benzoïques substitués ou non tels que le bis(4-tert-butylbenzoyl)résorcinol ; les acrylates ; les amines encombrées stériquement ; les diamides d'acide oxalique, les hydroxyphényl-s-triazine ; les composés du nickel tels que les complexes du nickel avec le 2,2'-thio-bis-4-(1,1,3,3 tétraméthylbutyl)-phénol.

Quand un de ces additifs est présent dans la composition, sa concentration pondérale est comprise entre 0,05 % et 5 % environ, par rapport à la composition totale.

Dans le cas où ces deux catégories de composés sont présents, ce qui représente un mode de réalisation préféré de l'invention, la concentration pondérale totale en ces composés est comprise entre 0,10 % et 5 % environ par rapport à la composition totale

Selon une autre caractéristique de l'invention, la composition peut comprendre un additif diminuant la vitesse de cristallisaiton du polymère constituant la matrice, et plus particulièrement du polyamide. Cet additif permet d'améliorer l'état de surface de la pièce moulée, et également d'améliorer l'aspect de surface de la pièce après l'exposition aux rayonnements tels que la lumière et/ou aux intempéries.

Les composés diminuant la cristallisation sont choisis parmi les produits de condensation de l'aniline avec le nitrobenzène ou les polyols, tels que le glycol ou les polyglycols.

Selon une caractéristique préférée de l'invention, le composé diminuant la vitesse de cristallisation est un produit de condensation de l'aniline avec le nitrobenzène, et plus particulièrement de la nigrosine ou ses dérivés tels que le chlorhydrate de nigrosine.

Selon une caractéristique de l'invention, la concentration massique en pigment noir d'origine minérale est au moins égale à 0,05 % environ de la composition totale, de préférence comprise entre 0,1 % et 2 % environ.

Les stabilisants thermiques sont ceux usuellement utilisés dans le domaine des polyamides, tels que les associations métal/halogène comme le système iodure de cuivre, iodure de potassium, par exemple. Ces composés sont présents à une concentration pondérale comprise entre 0.03 % et 1 % du poids total de la composition.

Quand l'additif diminuant la vitesse de cristallisation est de la nigrosine ou un de ses dérivés, la concentration pondérale totale en nigrosine et en pigment noir d'origine minérale est avantageusement au moins égale à 0,10 % de la composition totale, avantageusement comprise entre 0,15 et 0,5 % environ.

Dans les autres cas, l'additif diminuant la vitesse de cristallisation est présent selon une concentration pondérale au moins égale à 0,5 % et avantageusement comprise entre 1 % et 10 % de la composition totale.

Les compositions de l'invention peuvent également comprendre d'autres pigments pour obtenir des compositions de couleurs différentes, notamment des pigments blancs pour la réalisation de pièces de couleur grise.

Les compositions de l'invention peuvent comprendre une charge de renforcement constituée par des fibres minérales telles que des fibres de verre, fibres de carbone et/ou des fibres organiques telles que des fibres en polymère thermostable comme des fibres en poly(p-phénylène téréphtalamide), par exemple ou par des particules minérales telles que du kaolin, du talc ou du mica. Elles peuvent comprendre un mélange de celles-ci.

La composition de l'invention présente un aspect de surface très bon, c'est-à-dire que les charges et les pigments n'apparaissent pas en surface de la pièce.

La concentration pondérale en charge de renforcement peut être élevée et notamment supérieure à 10 % en poids par rapport au poids de la composition totale.

La composition peut également comprendre d'autres additifs usuellement utilisés pour la fabrication de compositions polyamides destinées à être moulées choisis dans le groupe constitué par les lubrifiants, ignifugeants, plastifiants, agents nucléants, agent d'amélioration de la résilience.

Les polyamides de l'invention sont les polyamides 6.6, les polyamides 6 et les copolyamides 66/6.

Les compositions de l'invention sont obtenues par les procédés classiques de mélange des différents additifs, soit par mélange en milieu fondu dans un mélangeur, soit par passage dans une extrudeuse mono ou double vis.

La composition ainsi obtenue, également appelée compound, est produite avantageusement sous forme de granulés obtenus par découpe d'un ou plusieurs joncs formés en sortie d'extrudeuse.

Selon un mode de réalisation de l'invention, au moins une partie des pigments et des additifs est ajoutée dans le polyamide sous forme d'un mélange-maître dont la matrice est un polyamide de même nature que celui de la composition ou différent, et dans lequel les pigments et/ou les additifs sont présents à une concentration élevée pouvant aller jusqu'à 50 % en poids. Ce procédé permet une meilleure dispersion des additifs et pigments dans la composition.

Les pièces moulées sont obtenues par mise en forme du compound par les techniques habituelles de moulage telles que moulage par injection, injection soufflage, injection gaz, injection compression, injection multimatières ou analogue.

Les propriétés des compositions sont déterminées par les méthodes suivantes :
- Indice de viscosité : cet indice est mesuré sur une solution de polymère contenant 0.5g de polymère dissous dans 100ml d'un solvant acide formique / eau (90 / 10) à une température de 25°C selon la Norme ISO 307/1984/015.
- Température de cristallisation au refroidissement : détermination par la méthode D.S.C. selon la Norme ISO 1218, pendant le refroidissement du polymère préalablement fondu .
- Résilience : Déterminée par la mesure de la résistance au choc Charpy "lisses" selon la Norme ISO 179/1eU.
- Aspect de surface des pièces moulées : cet aspect est appécié par estimation visuelle et comparaison avec un témoin de surface bonne formant référence. Pour cette appréciation on réalise une pièce d'aspect type "carter" par injection lente.
- Stabilité vis-à-vis de l'exposition aux rayonnements UV (Xénotest) : cette stabilité est mesurée par utilisation des appareils d'insolation artificielle : XENOTEST ou WEATHER-O-METER ATLAS CI35. La résistance de la couleur est évaluée par rapport à l'échelle des gris, conformément à la Norme française NF G 07-011. La durée de l'essai est définie par rapport à une échelle des bleus comprenant plusieurs échantillons conformément à la norme française NF G07-012.

Pendant chaque cycle, l'échantillon est arrosé par de l'eau pendant 3min. toutes les 20min., la durée d'arrosage étant portée à 23min. toutes les 6 heures. L'échantillon est éclairé pendant 21 heures puis non exposé à la lumière pendant 3 heures. Ce mode opératoire est mis en oeuvre avec le WEATHER-O-METER.

Les exemples donnés ci-dessous uniquement à titre indicatif illustreront l'invention et les avantages de celle-ci.

Dans les exemples ci-dessous les concentrations sont exprimées en pourcentage en poids du composé par rapport au poids total de la composition, sauf indication contraire.

Les compositions sont obtenues par alimentation dans une extrudeuse double vis d'un polyamide sous forme de granulés, et des différents additifs constituant la composition à fabriquer. Les conditions de mélange sont celles habituellement utilisées pour la fabrication des compounds à base de polyamide.

Généralement, les pigments sont alimentés sous forme d'un ou plusieurs mélanges-maître, c'est-à-dire de composition à base polyamide comprenant une concentration élevée en pigment. Ce mode d'introduction des pigments est uniquement un mode préféré.

Par ailleurs, ces mélanges-maître peuvent également contenir d'autres additifs tels que les stabilisants chaleurs, les lubrifiants ou analogue.

Les différents composants utilisés dans les essais ci-dessous sont :
- copolyamide 66/6 selon un rapport 90/10
- fibres de verre
- Kl
- Cul
- noir minéral :
   . noir Monarch commercialisé par la Société CABOTT
- Retardateur de cristallisation :
   . PA 6 (exemple 10)
   . Oisol black N (nigrosine BASE) commercialisée par la Société BAYER (exemples 7 et 9)
   . Noir Spirit BB (chlorhydrate de nigrosine) commercialisé par la Société SIMPSON (autres exemples)
- antioxydant :
   . Irganox 1098 (commercialisé par la Société CIBA-GEIGY)
   (exemples 1, 2, 3, 5, 10) 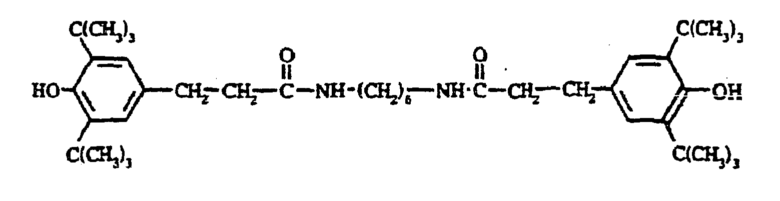
   . Irgafox 168 (commercialisé par la Société CIBA-GEIGY) (exemple 6) 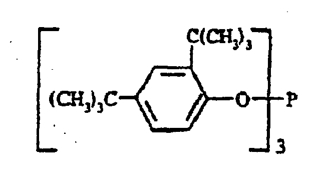
- stabilisant lumière :
   - TINUVIN 770 (commercialisé par la Société CIBA-GEIGY)
   (exemples 1, 2, 3, 4) 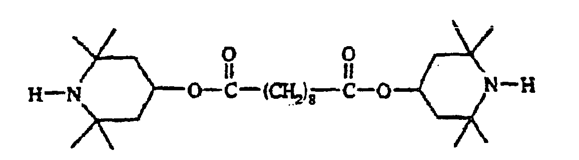
- TINUVIN 1577 (commercialisé par la Société CIBA-GEIGY) (exemple 10, en mélange avec TINUVIN 770 dans un rapport 1577/770 de 1/2) 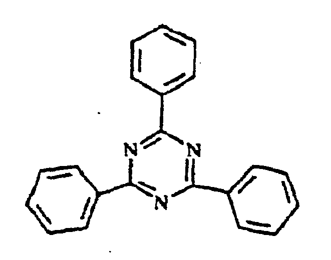
- stabilisants mixtes :
   - Tinuvin B 1166 FF (commercialisé par la Société CIBA-GEIGY) (exemples 7, 8, 9)
      - mélange de: : Irganox 1098 25 %
      : Irgafox 168 25 %
      : Tinuvin 770 50 %

Les granulés de chaque composition ont été moulés pour réaliser d'une part des éprouvettes sur lesquelles ont été mesurées les propriétés mécaniques et de la résistance aux rayons UV, et d'autre part des pièces pour apprécier l'état de surface.

Les compositions conformes à l'invention et leurs propriétés sont rassemblées dans le tableau 1 ci-dessous :
L'exemple 10 comprend également un pigment blanc composé par du TiO₂ avec une concentration de 0,095% en poids. La composition a une couleur grise.

**TABLEAU 1**

| | | 1 | 2 | 3 | 4 | 5 | 6 | 7 | 8 | 9 | 10 |
|---|---|---|---|---|---|---|---|---|---|---|---|
| Polyamide | | 68,37 | 78,13 | 78,36 | 78,70 | 68,79 | 68,79 | 68,26 | 78,40 | 77,33 | 63,65 |
| Fibres de verre | | 30 | 20 | 20 | 30 | 30 | 30 | 30 | 20 | 30 | 30 |
| Stabilisants | Cul | 0,044 | 0,05 | 0,05 | 0,044 | 0.044 | 0,044 | 0,028 | 0,05 | 0,044 | 0,044 |
| thermiques | Kl | 0.24 | 0,27 | 0,27 | 0,239 | 0,239 | 0,239 | 0,015 | 0,27 | 0,236 | 0,236 |
| Lubrifiant | | 0,41 | 0,47 | 0,47 | 0,408 | 0,408 | 0,408 | 0,172 | 0,31 | 0,27 | 0,27 |
| Antioxydants | | 0,109 | 0,125 | 0,125 | -- | 0,109 | 0,109 | -- | -- | -- | 0,109 |
| Stabilisant lumière | | 0,218 | 0,25 | 0,25 | 0,218 | -- | -- | 0,5 | 0,5 | 0,436 | 0,327 |
| Pigment noir minéral | | 0,409 | 0,468 | 0,234 | 0,204 | 0,204 | 0,204 | 0,129 | 0,233 | 0,202 | 0,179 |
| Retardateur de cristallisation | | 0,204 | 0,234 | 0,234 | 0,204 | 0,204 | 0,204 | 0,129 | 0,233 | 0,202 | 5 |
| Vieillissement après 6 cycles | | 4/5 | 4/5 | 4 | 4 | 4 | 4 | 4/5 | 4/5 | 4 | 4 |
| Aspect de surface | | = | + 1 | + 2 | = | = | = | = | = | = | = |
| Choc Charpy "Lisses" kJ/m² | | 77,9 | 44,8 | 53,7 | 77,1 | 78,2 | 80,4 | 64,3 | 41,3 | 69 | - |

Des essais de tenue au vieillissement UV ont été réalisés avec des compositions commerciales à base de matrice polytéréphtalate de butylèneglycol.

Ainsi, la composition commercialisée par la Société AKZO sous le nom de "ARNITE TV 4460 K" en coloration grise a la notation 415 après 6 cycles de vieillissement.

De même la composition T 29000 V 30 commercialisée par la Société Rhône-Poulenc Chimie a la notation 4 / 5 après 6 cycles de vieillissement.

Ces essais démontrent que les compositions conformes à l'invention comprenant comme matrice thermoplastique, un polyamide, ont une résistance à l'exposition de lumière du même ordre de grandeur et même équivalente à celle des compositions à matrice polyester.

## Revendications

1. Composition constituée de :
- une matrice thermoplastique constituée d'un polyamide semi-cristallin choisi parmi le polyamide 6, le polyamide 6.6 ou le copolyamide 6.6/6,
- des stabilisants thermiques,
- des pigments dont au moins un pigment noir, ledit pigment noir comprenant au moins un pigment noir d'origine minérale,
- au moins un composé diminuant l'effet de la lumière et/ou des rayons U.V. sur la dégradation de la matière polymérique formant la matrice de la composition,
- un composé diminuant la vitesse de cristallisation de la matrice thermoplastique choisi dans le groupe constitué des polyols et des produits de condensation de l'aniline avec le nitrobenzene,
- éventuellement une charge de renforcement choisie dans le groupe comprenant : des fibres de verre, fibres de carbone, fibres en polymère thermostable, du kaolin, du talc, du mica; et
- éventuellement des additifs utilisés pour la fabrication de compositions polyamides destinées à être moulées choisis dans le groupe constitué par les lubrifiants, ignifugeants, plastifiants, agents nucléants, et agents d'amélioration de la résilience.

2. - Composition selon la revendication 1, **caractérisée en ce que** le composé diminuant l'effet de la lumière et/ou des rayons U.V. est choisi dans le groupe comprenant les composés antioxydants, les composés absorbants la lumière et/ou les rayons U.V.,et leurs associations.

3. Composition selon la revendication 1 ou 2, **caractérisée en ce que** la concentration en pigment noir d'origine minérale est au moins égale à 0,05 % en poids de la composition totale, de préférence comprise entre 0,1 et 2 %.

4. Composition selon l'une des revendications 1 à 3, **caractérisée en ce que** la concentration en composé diminuant l'effet de la lumière et/ou des rayons U.V. est comprise entre 0,05 % et 5 %en poids de la composition totale.

5. Composition selon l'une des revendications 1 à 3, **caractérisée en ce que** la concentration en composé diminuant l'effet de la lumière et/ou des rayons U.V., quand il est constitué par une association d'au moins un composé antioxydant et d'au moins un composé absorbant, est comprise entre 0,10 et 5 % en poids de la composition totale.

6. -Composition selon l'une des revendications 2 à 5, **caractérisée en ce que** les composés antioxydants sont choisis dans le groupe comprenant les composés phénoliques stériquement encombrés, les amines aromatiques, les composés phosphites, phosphonites d'alkyles.

7. Composition selon l'une des revendications 2 à 6, **caractérisée en ce que** les composés absorbants la lumière et/ou les rayons U.V. sont choisis dans le groupe comprenant les composés du benzotriazole, 2-hydroxy-benzophénones, acrylates, esters d'acide benzoïque substitués ou non, les amines stériquement encombrés, les complexes du nickel, les diamides d'acide oxalique.

8. Composition selon la revendication 7, **caractérisée en ce que** les produits de condensation de l'aniline avec le nitrobenzène sont la nigrosine ou ses dérivés tels que le chlorhydrate de nigrosine.

9. Composition selon l'une quelconque des revendications 1 à 8, **caractérisée en ce que** la concentration pondérale en composé diminuant la vitesse de cristallisation quand il est constitué par un produit de condensation de l'aniline avec le nitrobenzène est au moins égale à 0,10% de la composition totale, de préférence comprise entre 0,15 et 0,50% .

10. Composition selon l'une quelconque des revendications 1 à 7, **caractérisée en ce que** la concentration pondérale en composé diminuant la vitesse de cristallisation quand il n'est pas constitué par un produit de condensation de l'aniline avec le nitrobenzène, est au moins égale à 0,5% de la composition totale, de préférence entre 1 et 10%.

11. Articles obtenus par moulage d'une composition selon l'une des revendications précédentes.

## Claims

1. Composition consisting of:
- a thermoplastic matrix consisting of a semicrystalline polyamide chosen from polyamide 6, polyamide 6,6 or copolyamide 6,6/6,
- heat stabilizers,
- pigments, including at least one black pigment, the said black pigment comprising at least one black pigment of mineral origin,
- at least one compound that reduces the effect of light and/or UV radiation on the degradation of the polymeric material forming the matrix of the composition,
- a compound that reduces the rate of crystallization of the thermoplastic matrix chosen from the group consisting of polyols and products resulting from the condensation of aniline with nitrobenzene,
- optionally a reinforcing filler chosen from the group comprising: glass fibres, carbon fibres, thermally stable polymer fibres, kaolin, talc and mica, and
- optionally additives used for the manufacture of polyamide compositions intended to be moulded chosen from the group consisting of lubricants, flame retardants, plasticizers, nucleating agents and agents for improving the toughness.

2. Composition according to Claim 1, **characterized in that** the compound that reduces the effect of light and/or UV radiation is chosen from the group comprising antioxidant compounds, light-absorbent and/or UV-absorbent compounds and combinations thereof.

3. Composition according to Claim 1 or 2, **characterized in that** the concentration of black pigment of mineral origin is at least equal to 0.05%, preferably between 0.1 and 2%, by weight of the total composition.

4. Composition according to one of Claims 1 to 3, **characterized in that** the concentration of the compound that reduces the effect of light and/or UV radiation is between 0.05% and 5% by weight of the total composition.

5. Composition according to one of Claims 1 to 3, **characterized in that** the concentration of the compound that reduces the effect of light and/or UV radiation, when it consists of a combination of at least one antioxidant compound and of at least one absorbent compound, is between 0.10 and 5% by weight of the total composition.

6. Composition according to one of Claims 2 to 5, **characterized in that** the antioxidant compounds are chosen from the group comprising sterically hindered phenolic compounds, aromatic amines, alkyl phosphite compounds and alkyl phosphonite compounds.

7. Composition according to one of Claims 2 to 6, **characterized in that** the light-absorbent and/or UV-absorbent compounds are chosen from the group comprising compounds of benzotriazole, 2-hydroxybenzophenones, acrylates, substituted or unsubstituted esters of benzoic acid, sterically hindered amines, nickel complexes and oxalic acid diamides.

8. Composition according to Claim 7, **characterized in that** the products resulting from the condensation of aniline with nitrobenzene are nigrosine or its derivatives, such as nigrosine hydrochloride.

9. Composition according to any one of Claims 1 to 8, **characterized in that** the weight concentration of compound that reduces the rate of crystallization when it consists of a product resulting from the condensation of aniline with nitrobenzene is at least 0.10%, preferably between 0.15 and 0.50%, of the total composition.

10. Composition according to any one of Claims 1 to 7, **characterized in that** the weight concentration of compound that reduces the rate of crystallization when it does not consist of a product resulting from the condensation of aniline with nitrobenzene is at least 0.5%, preferably between 1 and 10%, of the total composition.

11. Articles obtained by moulding a composition according to any one of the preceding claims.

## Patentansprüche

1. Zusammensetzung, gebildet durch:
- eine thermoplastische Matrix, bestehend aus einem semikristallinen Polyamid, ausgewählt unter Polyamid 6, Polyamid 6.6 oder Copolyamid 6.6/6,
- thermische Stabilisatoren,
- Pigmente, unter ihnen mindestens ein schwarzes Pigment, wobei das genannte schwarze Pigment mindestens ein schwarzes Pigment mineralischen Ursprungs umfasst,
- mindestens eine Verbindung, welche die Einwirkung des Lichtes und/oder von UV-Strahlen auf den Abbau des polymeren Materials, das die Matrix der Zusammensetzung bildet, verringert,
- eine Verbindung, welche die Geschwindigkeit der Kristallisation der thermoplastischen Matrix verringert, gewählt aus der Gruppe, die gebildet wird durch Polyole und Produkte der Kondensation von Anilin mit Nitrobenzol,
- gegebenenfalls einen verstärkenden Füllstoff, gewählt aus der Gruppe, die umfasst: Glasfasern, Kohlenstoffgasern, Fasern aus thermostabilem Polymer, Kaolin, Talk, Glimmer, und
- gegebenenfalls Zusatzstoffe, wie sie bei der Herstellung von Polyamid-Zusammensetzungen verwendet werden, die dazu vorgesehen sind, gegossen zu werden, gewählt aus der Gruppe, die gebildet wird durch Gleitmittel, Flammschutzmittel, Weichmacher, Kernbildungsmittel und Mittel zur Verbesserung der Kerbschlagzähigkeit.

2. Zusammensetzung nach Anspruch 1, **dadurch gekennzeichnet, dass** die Verbindung, welche die Einwirkung des Lichtes und/oder von UV-Strahlen verringert, aus der Gruppe gewählt wird, die Antioxidantien-Verbindungen, Verbindungen zur Absorption von Licht und/ oder UV-Strahlen und ihre Assoziationen umfaßt.

3. Zusammensetzung nach Anspruch 1 oder 2, **dadurch gekennzeichnet, daß** die Konzentration an schwarzem Pigment mineralischen Ursprungs mindestens gleich 0,05 Gew.-% der Gesamtzusammensetzung, vorzugsweise zwischen einschließlich 0,1 Gew.-% und 2 Gew.-% beträgt.

4. Zusammensetzung nach einem der Ansprüche 1 bis 3, **dadurch gekennzeichnet, dass** die Konzentration an der Verbindung, welche die Einwirkung des Lichtes und/oder von UV-Strahlen verringert, zwischen einschließlich 0,05 Gew.-% und 5 Gew.-% der Gesamtzusammensetzung beträgt.

5. Zusammensetzung nach einem der Ansprüche 1 bis 3, **dadurch gekennzeichnet, dass** die Konzentration an der Verbindung, welche die Einwirkung des Lichtes und/oder von UV-Strahlen verringert, wenn sie aus einer Assoziation von mindestens einer Antioxidantien-Verbindung und mindestens einer Verbindung zur Absorption besteht, zwischen einschließlich 0,10 Gew.-% und 5 Gew.-% der Gesamtzusammensetzung beträgt.

6. Zusammensetzung nach einem der Ansprüche 2 bis 5, **dadurch gekennzeichnet, dass** die Antioxidantien-Verbindungen aus der Gruppe gewählt werden, die sterisch sperrige phenolische Verbindungen, aromatische Amine, Phosphitverbindungen und Alkylphösphonite umfaßt.

7. Zusammensetzung nach einem der Ansprüche 2 bis 6, **dadurch gekennzeichnet, dass** die Verbindungen, die Licht und/oder UV-Strahlen absorbieren, aus der Gruppe gewählt werden, die Verbindungen von Benzotriazol, 2-Hydroxy-benzophenonen, Acrylaten, substituierten oder unsubstituierten Estern von Benzoesäure, sterisch sperrigen Amine, Komplexe von Nickel und Diamide von Oxalsäure umfaßt.

8. Zusammensetzung nach Anspruch 7, **dadurch gekennzeichnet, dass** die Produkte der Kondensation von Anilin mit Nitrobenzol Nigrosin oder seine Derivate sind wie Nigrosin-Hydrochlorid.

9. Zusammensetzung nach einem der Ansprüche 1 bis 8, **dadurch gekennzeichnet, dass** die gewichtsmäßige Konzentration an der Verbindung, welche die Geschwindigkeit der Kristallisation herabsetzt, wenn sie aus einem Produkt der Kondensation von Anilin mit Nitrobenzol besteht, mindestens gleich 0,10 % der Gesamtzusammensetzung, vorzugsweise zwischen einschließlich 0,15 % und 0,50 % beträgt.

10. Zusammensetzung nach einem der Ansprüche 1 bis 7, **dadurch gekennzeichnet, dass** die gewichtsmäßige Konzentration an der Verbindung, welche die Geschwindigkeit der Kristallisation herabsetzt, wenn sie nicht aus einem Produkt der Kondensation von Anilin mit Nitrobenzol besteht, mindestens gleich 0,5 % der Gesamtzusammensetzung, vorzugsweise zwischen 1 % und 10 % beträgt.

11. Artikel, erhalten durch Formgießen einer Zusammensetzung nach einem der vorstehenden Ansprüche.
